# EUROPÄISCHE PATENTSCHRIFT

(11) **EP 1 518 133 B1**
(45) Veröffentlichungstag und Bekanntmachung des Hinweises auf die Patenterteilung: **06.10.2010**
(21) Anmeldenummer: 03792360.4
(22) Anmeldetag: 18.08.2003
(51) Int. Cl.: G01S 17/93

(54) **UEBERWACHUNG DER UMGEBUNG EINES GEGENSTANDES**
MONITORING THE ENVIRONMENT OF AN OBJECT
SURVEILLANCE DE L'ENVIRONNEMENT D'UN OBJET

(30) Priorität: 23.08.2002 DE 10238759
(43) Veröffentlichungstag der Anmeldung: 30.03.2005
(73) Patentinhaber: SICK AG, 79183 Waldkirch (DE)
(72) Erfinder: TABEL, Ernst, 22337 Hamburg (DE); LAGES, Ulrich, 21031 Hamburg (DE)
(74) Vertreter: Manitz, Finsterwald & Partner GbR
(86) Internationale Anmeldenummer: PCT/EP2003/009129
(87) Internationale Veröffentlichungsnummer: WO 2004/019293

(56) Entgegenhaltungen:
- EP-A- 0 814 348
- WO-A-01/90777
- WO-A-02/27351
- DE-A- 19 501 612
- DE-A- 19 858 129

## Beschreibung

Die Erfindung betrifft eine Vorrichtung sowie ein Verfahren zum Überwachen der Umgebung eines Gegenstandes, insbesondere eines Fahrzeugs, mit wenigstens einem am Gegenstand angebrachten optoelektronischen Sensor, der einen Überwachungsbereich abtastet und von im Überwachungsbereich befindlichen Objekten stammende Messdaten liefert.

Insbesondere bei der Umgebungsüberwachung in Verbindung mit Fahrzeugen, aber auch in Verbindung mit anderen Gegenständen wie z.B. Maschinen und Robotern, die eine Gefahr für sich in der Nähe aufhaltende Personen darstellen können, ist man bestrebt, auf im Überwachungsbereich auftretende Situationen jeweils angemessen zu reagieren. Insbesondere unter dem Aspekt der Personensicherheit muss dafür gesorgt werden, dass Personen durch das sich bewegende Fahrzeug nicht gefährdet werden. Darüber hinaus ist man bestrebt, so viele Informationen wie möglich aus dem Überwachungsbereich zu sammeln, um die Möglichkeit zu einer differenzierten Reaktion auf im Überwachungsbereich auftretende Situationen zu schaffen.

Bei der Entwicklung von Überwachungssystemen muss berücksichtigt werden, dass insbesondere für sicherheitsrelevante Anwendungen das Überwachungskonzept von einer unabhängigen Prüfstelle zugelassen werden muss. Ohne eine entsprechende Zertifizierung ist auch ein noch so zuverlässig arbeitendes Überwachungssystem nicht wirtschaftlich verwertbar. Dies gilt sowohl für Anwendungen an Fahrzeugen als auch in Verbindung mit Maschinen und Robotern.

Problematisch ist dies dann, wenn für bestimmte Anwendungen oder für bestimmte Leistungsmerkmale eines Überwachungssystems keine die. Zulassung regelnden Bestimmungen existieren. So werden beispielsweise derzeit keine Zertifikate für solche optoelektronischen Sensoren in Form von Laserscannern ausgestellt, die an Fahrzeugen angebracht sind, welche als führerlose Transportsysteme, z.B. für den Transport von Personen, im Außenbereich eingesetzt werden. Zertifizierte Überwachungssysteme für den Innenbereich, z.B. an fahrerlosen Transportsystemen für Produktionsanlagen, existieren dagegen.

Derartige Indoor-Überwachungssysteme bzw. die mit diesen Systemen realisierten Überwachungskonzepte sind jedoch für den Outdoor-Bereich nicht oder nur bedingt geeignet, da es in Situationen, die im Innenbereich nicht auftreten können, bei den Indoor-Systemen immer wieder zu Störungen des Überwachungsbetriebs kommt, die z.B. durch Umwelteinflüsse wie beispielsweise Regen oder durch unkritische Objekte bzw. Objektbewegungen, wie beispielsweise wehende Blätter, verursacht werden.

Es existieren zwar gezielt für Außenanwendungen entwickelte Überwachungskonzepte, mit denen eine Erkennung und Verfolgung von im Überwachungsbereich befindlichen Objekten und insbesondere eine Unterscheidung zwischen relevanten und irrelevanten Objekten möglich ist. Derartige Überwachungssysteme sind jedoch derzeit mangels Zertifizierungsmöglichkeit noch nicht wirtschaftlich verwertbar.

DE 198 58 129 A1 betrifft ein Verfahren und eine Vorrichtung zum Detektieren eines Hindernisses, wobei ein Überwachungsbereich durch eine Vielzahl von Hindernissensorsystemen abgetastet wird, die gescannten Daten, die von den Hindernissensorsystemen empfangen wurden, gewichtet werden, und mindestens eine Charakteristik des Hindernisses als eine Funktion der gewichteten, gescannten Daten bestimmt wird.

EP 0 814 348 A2 und DE 195 01 612 A1 betreffen jeweils ein Messverfahren, um den Abstand zwischen einem Kraftfahrzeug und einem Objekt zu bestimmen. Hierzu werden im Kraftfahrzeug bei kleiner Objektentfernung die Ausgangssignale einer ersten Messvorrichtung mit entsprechendem Messbereich und bei größerer Objektentfernung die Ausgangssignale einer zweiten Messvorrichtung mit entsprechend größerem Messbereich dominierend berücksichtigt. Bei der EP 0 814 348 A2 kommt ein gemeinsamer Sensor für die beiden Messbereiche zum Einsatz, bei der DE 195 01 612 A1 werden zwei Sensoren eingesetzt.

WO 02/27351 A1 betrifft ein Verfahren zum Betrieb eines Fahrerassistenzsystems für Kraftfahrzeuge, bei dem im Folgebetrieb eine vom Abstand zu detektierten und als relevant klassifizierten Zielobjekten abhängige Regelung der Geschwindigkeit des Kraftfahrzeugs erfolgt. Durch die Betätigung eines vom Bediener des Kraftfahrzeugs zu betätigenden Bedienelements im Folgebetrieb werden die für die Geschwindigkeitsregelung herangezogenen relevanten Zielobjekte ausgewählt.

Aufgabe der Erfindung ist es, eine Möglichkeit zu schaffen, unter gleichzeitiger Berücksichtigung der jeweiligen Zertifizierungssituation eine möglichst sichere und differenzierte Überwachung der Umgebung von Gegenständen durchzuführen, wobei dies insbesondere in Verbindung mit sich bewegenden Gegenständen und insbesondere mit Fahrzeugen möglich sein soll.

Die Lösung dieser Aufgabe erfolgt durch die Merkmale der unabhängigen Ansprüche 1 und 7.

Erfindungsgemäß werden die vom Sensor gelieferten Messdaten gleichzeitig auf unterschiedliche Art und Weise ausgewertet. Hierdurch können die Auswertekriterien in den einzelnen Auswertepfaden unabhängig voneinander gewählt werden, wodurch mit der erfindungsgemäßen Überwachungsvorrichtung gleichzeitig mehrere Überwachungskonzepte realisiert werden können. Der Einsatz mehrerer paralleler Auswertepfade ermöglicht es somit, die gleiche tatsächliche Situation im Überwachungsbereich gewissermaßen unter verschiedenen Blickwinkeln zu betrachten und mit unterschiedlichen Zielsetzungen auszuwerten.

Die einzelnen Auswertepfade können - bildlich gesprochen - als die Achsen eines mehrdimensionalen Koordinatensystems betrachtet werden, in welchem jeder Punkt einem bestimmten Überwachungskonzept entspricht. Die mittels der Steuereinrichtung durchführbare Gewichtung der über die einzelnen Auswertepfade bereitgestellten Umgebungsinformationen ermöglicht eine gezielt auf den jeweiligen Anwendungsfall zugeschnittene Parametrisierung oder "Mischung" der einzelnen, in den Auswertepfaden erfolgenden "reinen" Basis-Überwachungskonzepte.

Das schließlich bereitgestellte, aus der jeweiligen Gewichtung resultierende und damit die jeweilige Reaktionsstrategie widerspiegelnde Steuersignal kann dann zur Steuerung des Gegenstandes verwendet werden, wobei in diesem Zusammenhang unter "Steuerung" sowohl Eingriffe in den Betrieb des Gegenstandes, insbesondere in den Fahrbetrieb des Fahrzeuges, wie z.B. Brems- und Lenkmanöver, als auch die Erzeugung von z.B. optischen und akustischen Anzeigen für einen gegebenenfalls vorhandenen Bediener einer Maschine oder für einen Fahrzeugführer zu verstehen sind.

Die Gewichtung kann sowohl die reinen Extremzustände - d.h. ein Auswertepfad wird zu 100% berücksichtigt, während die anderen Auswertepfade ignoriert werden - als auch Mischzustände umfassen, zu denen wenigstens zwei Auswertepfade zu gleichen oder unterschiedlichen Anteilen beitragen.

Einen bevorzugten Anwendungsbereich der Erfindung bilden jedoch fahrerlose Transportsysteme, so dass auf die jeweils vorgenommene Gewichtung der über die einzelnen Auswertepfade bereitgestellten Umgebungsinformationen vorzugsweise mit einem Eingriff in den Fahrbetrieb des Transportsystems reagiert wird.

Die Lösung der der Erfindung zugrunde liegenden Aufgabe erfolgt außerdem durch die Merkmale des unabhängigen Verfahrensanspruchs 8.

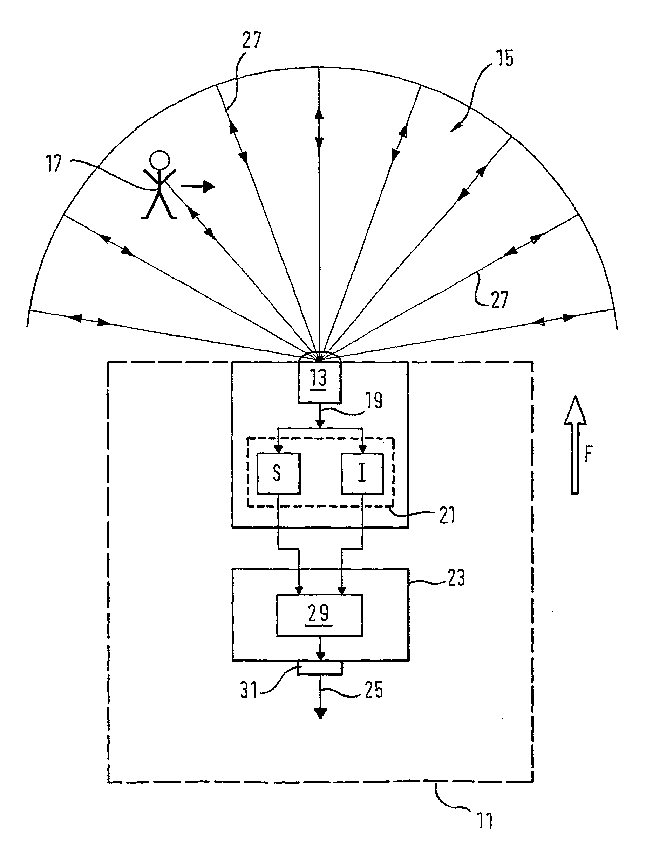

Bevorzugte Ausführungsformen der Erfindung sind in den Unteransprüchen, der Beschreibung sowie der Zeichnung angegeben.

So ist gemäß einem bevorzugten Ausführungsbeispiel vorgesehen, dass ein Auswertepfad als Sicherheitspfad ausgebildet ist, in welchem die Messdaten nach dem Kriterium der Sicherheit und insbesondere nach dem Kriterium einer maximalen Personensicherheit ausgewertet werden.

Dabei kann "maximale Sicherheit" insbesondere bedeuten, dass die Messdaten ausschließlich oder zumindest in erster Linie daraufhin untersucht werden, ob sich im Überwachungsbereich überhaupt ein Objekt befindet. Im Fall des Nachweises eines Objektes kann dann - im Beispiel einer Fahrzeuganwendung - über den Sicherheitspfad eine Notbremsung des Fahrzeugs vorgeschlagen und - bei entsprechender Gewichtung durch die Steuereinrichtung - diese Notbremsung auch tatsächlich durchgeführt werden. Eine "verfeinerte" Auswertung des Sicherheitspfades bestünde beispielsweise darin, dass eine Notbremsung nur dann vorgeschlagen wird, wenn sich das nachgewiesene Objekt auf der bekannten oder vorausberechneten Fahrspur des Fahrzeugs befindet oder sich derart bewegt, dass eine Kollision mit dem Fahrzeug mit einer bestimmten Wahrscheinlichkeit erfolgen wird.

Besonders bevorzugt ist es, wenn die Auswertekriterien des Sicherheitspfades derart gewählt werden, dass diese Auswertekriterien geltenden Zulassungsbestimmungen genügen, so dass der Sicherheitspfad der erfindungsgemäßen Überwachungsvorrichtung von einer unabhängigen Prüfstelle zugelassen, d.h. zertifiziert werden kann. Der Benutzer des Überwachungssystems, z.B. der Betreiber des betreffenden Fahrzeugs, kann dann durch entsprechende Einstellung der Gewichtung in der Steuereinrichtung das Fahrzeug für solche Anwendungen vorsehen, die einer derartigen Zertifizierung bedürfen.

Der große Vorteil für den Hersteller der erfindungsgemäßen Überwachungsvorrichtung besteht darin, dass er dem Maschinen- bzw. Fahrzeughersteller oder -betreiber ein zertifiziertes bzw. zertifizierbares Überwachungssystem anbieten kann, das aber aufgrund des zumindest einen zusätzlichen Auswertepfades weitere, grundsätzlich beliebig wählbare Auswerte- und damit Reaktionsmöglichkeiten bietet, und zwar insbesondere im Hinblick auf eine differenziertere Analyse von im Überwachungsbereich auftretenden Situationen. Es bleibt dann dem Maschinen- bzw. Fahrzeughersteller bzw. -betreiber überlassen, inwieweit er von den vielfältigen Einsatzmöglichkeiten der erfindungsgemäßen Überwachungsvorrichtung Gebrauch macht. Hierfür stehen dem Maschinen- bzw. Fahrzeughersteller bzw. Fahrzeugbetreiber mit der erfindungsgemäßen Gewichtbarkeit der einzelnen Auswertepfade alle Möglichkeiten offen.

Des Weiteren ist erfindungsgemäß bevorzugt vorgesehen, dass ein Auswertepfad als Informationspfad ausgebildet ist, in welchem die Messdaten nach dem Kriterium des Informationsgehalts und insbesondere nach dem Kriterium eines möglichst hohen Informationsgehalts auswertbar sind.

In diesem Auswertepfad können die Auswertekriterien insbesondere derart gewählt werden, dass unter Ausnutzung des vollen Leistungsspektrums des optoelektronischen Sensors sowie der nachgeordneten Auswerteeinrichtung, insbesondere der in der Auswerteeinrichtung ablaufenden, grundsätzlich beliebig komplexen Auswertesoftware, so viele Informationen wie möglich über den Überwachungsbereich und insbesondere über im Überwachungsbereich befindliche Objekte gewonnen werden. Diese Informationen können alle denkbaren Eigenschaften der Objekte selbst sowie der Objektbewegungen umfassen, wobei auch Informationen über den momentanen Betrieb der Maschine/des Roboters bzw. des Fahrbetrieb des Fahrzeugs, wie insbesondere Fahrtrichtung und Fahrgeschwindigkeit, berücksichtigt werden können. Dabei ist der Informationspfad insbesondere zur Durchführung einer auf den Messdaten basierenden Erkennung und Verfolgung von im Überwachungsbereich befindlichen Objekten ausgebildet.

Inwieweit von den mittels des Informationspfades gesammelten Objektinformationen tatsächlich Gebrauch gemacht wird, hängt von der jeweils vorgenommenen oder voreingestellten Gewichtung in der Steuereinrichtung ab. Die Nutzung dieser Umgebungsinformationen kann beispielsweise von der jeweiligen Gesamtsituation abhängig gemacht werden, d.h. situationsadaptiv erfolgen.

Wenn z.B. aufgrund des Einsatzbereiches des Fahrzeugs sowohl mit Fahrzeugen als auch mit Personen im Überwachungsbereich gerechnet werden muss, d.h. eine Fahrsituation mit gemischtem Verkehr vorliegt, dann kann beispielsweise der Sicherheitspfad ausschließlich herangezogen oder zumindest stärker gewichtet und als Reaktion auf den Nachweis eines Objektes im Überwachungsbereich dieses Objekt pauschal als Person gewertet und infolgedessen eine Notbremsung eingeleitet werden. Wenn dagegen das Fahrzeug in einem abgesperrten Bereich eingesetzt wird, in welchem sich keine Personen aufhalten können, dann kann auf die gleiche Situation im Überwachungsbereich unter ausschließlicher Nutzung oder stärkerer Gewichtung des Informationspfades die Fahrzeuggeschwindigkeit reduziert oder ein Lenkmanöver zum Umfahren des nachgewiesenen Objektes, beispielsweise eines feststehenden Hindernisses oder eines anderen, sich bewegenden Verkehrsteilnehmers, eingeleitet werden. Entsprechende Einsatzmöglichkeiten schafft die Erfindung in Maschinen- bzw. Roboteranwendungen.

Die Gewichtung der Auswertepfade kann insbesondere automatisch erfolgen, d.h. die Steuereinrichtung entscheidet selbständig nach zuvor festgelegten Regeln, wie die Auswertepfade bzw. die über die Auswertepfade gelieferten Umgebungsinformationen gewichtet werden. Diese Entscheidung kann von der jeweiligen Betriebs-, Fahr- oder Umgebungssituation abhängig gemacht werden, d.h. situationsadaptiv erfolgen, wobei die Überwachungsvorrichtung mit Hilfe ihres Sensors selbst in der Lage ist, die jeweilige Situation zu erkennen. Hierdurch wird ein intelligentes, selbständig arbeitendes und auf jede Situation angemessen reagierendes System geschaffen, das insbesondere lediglich vorgegebene Grundregeln verwendet, d.h. dem zuvor "beigebracht" werden kann, wie in welcher Situation vorzugehen ist.

Gemäß einem weiteren bevorzugten Ausführungsbeispiel der Erfindung ist für die Auswertepfade ein gemeinsamer optoelektronischer Sensor vorgesehen, dessen Messdaten gleichzeitig in allen Auswertepfaden auswertbar sind.

Hierdurch wird ein integriertes Kombinationsgerät geschaffen, das für mehrere Auswertepfade lediglich einen einzigen optoelektronischen Sensor einsetzt.

Alternativ kann mit mehreren Sensoren gearbeitet werden, wobei jedem Auswertepfad wenigstens ein eigener optoelektronischer Sensor zugeordnet ist, dessen Messdaten ausschließlich in dem jeweiligen Auswertepfad ausgewertet werden. Dabei kann jedem Sensor ein eigenes Auswertemodul zugeordnet sein, in welchem die vom jeweiligen Sensor gelieferten Messdaten auswertbar sind. Folglich braucht erfindungsgemäß nicht zwangsläufig mit einem integrierten Kombinationsgerät gearbeitet zu werden, sondern die Erfindung kann auch in Form mehrerer separater Geräte realisiert werden, die jeweils einen eigenen Sensor und ein eigenes Auswertemodul für den Sensor umfassen und von denen jedes einen Auswertepfad repräsentiert. Die Mehrzahl von Auswertemodulen bildet dann eine Auswerteeinrichtung im Sinne der unabhängigen Ansprüche der vorliegenden Anmeldung. Zusammengeführt zu werden brauchen diese Geräte, d.h. die einzelnen Auswertepfade, dann lediglich zum Zwecke der Gewichtung der von den einzelnen Auswertepfaden gelieferten Umgebungsinformationen.

Grundsätzlich kann erfindungsgemäß einer Mehrzahl von Sensoren aber auch eine gemeinsame Auswerteeinrichtung zugeordnet werden.

In einer besonders bevorzugten praktischen Ausgestaltung der Erfindung ist der oder jeder optoelektronische Sensor als Laserscanner ausgebildet, insbesondere als ein Entfernungen und Winkel messender Laserscanner, der in zumindest einer Abtastebene zu jedem Entfernungswert einen auf eine Sensorachse bezogenen Winkelwert liefert.

Die Erfindung wird im Folgenden beispielhaft unter Bezugnahme auf die Zeichnung beschrieben, deren einzige Figur schematisch eine Ausführungsform eines erfindungsgemäßen Überwachungssystems zeigt, das zur Durchführung des erfindungsgemäßen Überwachungsverfahrens ausgebildet ist, wobei sich dieses Ausführungsbeispiel auf eine Fahrzeuganwendung bezieht, grundsätzlich aber entsprechende Anwendungen auch in anderen Bereichen z.B. in Verbindung mit Maschinen und Robotern möglich sind.

In der Figur schematisch dargestellt ist ein Fahrzeug 11, insbesondere ein fahrerloses Transportfahrzeug zum Transport von Personen oder Gegenständen, das mit einem optoelektronischen Sensor in Form eines Laserscanners 13 versehen ist. Der Laserscanner 13 ist in diesem Ausführungsbeispiel mittig an der Fahrzeugfront angebracht und tastet in einer Abtastebene mit einem periodisch ausgesandten Laserstrahl einen etwa 180° umfassenden, in Fahrtrichtung F vor dem Fahrzeug 11 liegenden Überwachungsbereich 15 ab.

Derartige Laserscanner 13 sind grundsätzlich bekannt, so dass auf deren Aufbau und Funktionsweise hier nicht im Detail eingegangen wird. Bemerkt sei lediglich, dass für jeden Winkel, unter welchem die Abtaststrahlen 27 relativ zu einer beispielsweise mit der Fahrtrichtung F zusammenfallenden Bezugsrichtung ausgesandt werden, durch Messung der Laufzeit, welche die ausgesandte und im Überwachungsbereich 15 reflektierte Strahlung von ihrer Aussendung bis zum Nachweis am Laserscanner 13 benötigt, die Entfernung zu dem reflektierenden Objekt 17 - hier ein Fußgänger - im Überwachungsbereich 15 benötigt. Für jede auch als "Scan" bezeichnete Abtastung des Überwachungsbereichs 15 liefert der Laserscanner 13 somit ein tiefenaufgelöstes Bild mit einer von der Winkelauflösung des Scanners 13 abhängigen Vielzahl von Messpunkten in der entsprechenden Abtastebene, wobei die Messdaten 19 Richtungsinformationen und zugehörige Entfernungsinformationen beinhalten. Es sind auch solche Laserscanner 13 einsetzbar, welche die Abtaststrahlen 27 in mehreren Abtastebenen aussenden.

Mittels des Laserscanners 13 sind somit Lage und Entfernung des Objekts 17 relativ zum Fahrzeug 11 bestimmbar. Die vom Laserscanner 13 gelieferten Messdaten 19 werden aufgeteilt und zwei parallel geschalteten Auswertemodulen S, I einer gemeinsamen Auswerteeinrichtung 21 zugeführt. Die beiden Auswertemodule S, I sind jeweils Bestandteil eines Auswertepfades, wobei in den Auswertepfaden S, I die Messdaten 19 gleichzeitig nach bestimmten Auswertekriterien ausgewertet werden. Die Auswertekriterien in den einzelnen Auswertepfaden S, I werden unterschiedlich gewählt, um auf diese Weise die jeweilige Situation im Überwachungsbereich 15 unter verschiedenen Blickwinkeln zu analysieren.

In dem dargestellten Ausführungsbeispiel ist das Auswertemodul S als ein Sicherheitsmodul ausgebildet, in welchem die Messdaten 19 nach dem Kriterium einer maximalen Sicherheit ausgewertet werden, während in dem anderen Auswertepfad das Auswertemodul als Informationsmodul I ausgelegt ist, in welchem die Auswertekriterien derart gewählt sind, dass die Auswertung der Messdaten 19 nach dem Kriterium eines maximale Informationsgehalts erfolgt.

Die Auswertekriterien des Sicherheitspfades S entsprechen geltenden Zulassungsbestimmungen, d.h. der Sicherheitspfad S ist zertifiziert bzw. zertifizierbar. Diese Bedingung muss für den Informationspfad I nicht gelten, der dafür zu einer differenzierteren Analyse der Situation im Überwachungsbereich 15 und dabei zu einer Objekterkennung und -verfolgung ausgebildet ist. Zugespitzt formuliert erfolgt im Sicherheitspfad S eine einfache, aber sichere Auswertung der Messdaten 19, während im Informationspfad I eine differenzierte, jedoch - zumindest im Zeitpunkt der Einreichung der vorliegenden Anmeldung - nicht zertifizierbare Messdatenauswertung durchgeführt wird.

Die über die beiden Auswertepfade S, I bereitgestellten, unterschiedlichen Umgebungsinformationen werden einer gemeinsamen Steuereinrichtung 23 zugeführt, die ein Gewichtungsmodul 29 aufweist, in welchem die von den Auswertemodulen S, I gelieferten Informationen entsprechend einer vorgewählten oder situationsadaptiv automatisch veränderbaren Gewichtung zusammengeführt werden, wobei die jeweilige Gewichtung bzw. das Spektrum an im Fahrbetrieb möglichen Gewichtungen die mit dem erfindungsgemäßen Überwachungssystem jeweils gewünschte Reaktionsstrategie widerspiegelt.

In Abhängigkeit von der jeweils geltenden Gewichtung wird über eine Schnittstelle 31 der Steuereinrichtung 23 ein Steuersignal 25 für eine nicht dargestellte Zentraleinheit des Fahrzeugs 11 bereitgestellt, die das Steuersignal 25 dazu verwendet, in den Fahrbetrieb einzugreifen und beispielsweise Lenkmanöver oder Brems- bzw. Beschleunigungsvorgänge einzuleiten.

Wenn beispielsweise am Gewichtungsmodul 29 eine Gewichtung mit dem Ziel maximaler Sicherheit eingestellt ist, dann wird jedes im Überwachungsbereich 15 mittels des Laserscanners 13 nachgewiesene Objekt 17 als eine Person gewertet und durch Ausgabe eines entsprechenden Steuersignals 25 eine Notbremsung des Fahrzeugs 11 eingeleitet. Das Informationsmodul I dagegen ist beispielsweise in der Lage, eine Bewegungsrichtung und -geschwindigkeit des Objekts 17 zu erkennen und unter Berücksichtigung der Eigengeschwindigkeit des Fahrzeugs 11 zu ermitteln, dass ein Bremsvorgang nicht erforderlich ist, sondern es ausreicht, unter Beibehaltung oder Erhöhung der Fahrzeuggeschwindigkeit ein Lenkmanöver einzuleiten und das als Fußgänger identifizierte Objekt 17 großräumig zu umfahren, wobei mittels des entsprechenden Steuersignals 25 außerdem veranlasst werden kann, dass die Hupe des Fahrzeugs 11 betätigt wird, um den Fußgänger 17 zusätzlich zu warnen.

Es bleibt dem Fahrzeughersteller bzw. -betreiber überlassen, durch entsprechende Einstellung der Gewichtung bzw. des möglichen Gewichtungsspektrums am Gewichtungsmodul 29 die Erzeugung eines den jeweiligen Anwendungswünschen entsprechenden Steuersignals 25 zu veranlassen.

Dabei sind am Gewichtungsmodul 29 nicht ausschließlich die reinen Extremzustände, d.h. eine Reaktionsstrategie maximaler Sicherheit oder eine Reaktionsstrategie maximalen Informationsgehalts einstellbar, sondern es können auch Mischzustände gewählt werden, in die der Aspekt der Sicherheit mehr oder weniger stark einfließt. So kann beispielsweise im Fall des Nachweises eines Objekts 17 im Überwachungsbereich 15 von einer Beschleunigung des Fahrzeugs 11 und einem Umfahren des Objekts 17 - obwohl dies gemäß der durch das Informationsmodul I erfolgenden Auswertung der Messdaten 19 möglich wäre - dann abgesehen werden, wenn mittels des Informationsmoduls I erkannt wird, dass sich das Objekt in Richtung der vorgesehenen Fahrspur des Fahrzeugs 11 bewegt (wie in der Figur durch den nach rechts weisenden Pfeil angedeutet). In Abhängigkeit von der Eigengeschwindigkeit des Fahrzeugs 11 kann dabei aber auch von einer Notbremsung, die vom Sicherheitsmodul S vorgeschlagen wird, abgesehen werden und statt dessen lediglich die Fahrzeuggeschwindigkeit reduziert und gegebenenfalls ein Hupsignal erzeugt werden.

### Bezugszeichenliste

- 11: Gegenstand, Fahrzeug
- 13: Sensor, Laserscanner
- 15: Überwachungsbereich
- 17: Objekt, Fußgänger
- 19: Messdaten
- 21: Auswerteeinrichtung
- 23: Steuereinrichtung
- 25: Steuersignal
- 27: Abtaststrahl
- 29: Gewichtungsmodul
- 31: Schnittstelle

- S: Sicherheitspfad, Auswertemodul
- I: Informationspfad, Auswertemodul
- F: Fahrtrichtung

## Patentansprüche

1. Vorrichtung zum Überwachen der Umgebung eines Gegenstandes, insbesondere eines Fahrzeugs, mit
- wenigstens einem am Gegenstand (11) angebrachten optoelektronischen Sensor (13), der einen Überwachungsbereich (15) abtastet und von im Überwachungsbereich (15) befindlichen Objekten (17) stammende Messdaten (19) liefert,
- einer dem Sensor (13) nachgeordneten Auswerteeinrichtung (21) zur Auswertung der vom Sensor (13) gelieferten Messdaten (19) und zur Bereitstellung von auf den Messdaten (19) basierenden Umgebungsinformationen, und
- einer der Auswerteeinrichtung (21) nachgeordneten Steuereinrichtung (23), die auf die bereitgestellten Umgebungsinformationen gemäß einer vorgebbaren Reaktionsstrategie durch Bereitstellen eines zur Steuerung des Gegenstandes (11) dienenden Steuersignals (25) reagiert,
wobei die Auswerteeinrichtung (21) wenigstens zwei parallele, voneinander unabhängige Auswertepfade (S, I) aufweist, in denen die Messdaten (19) gleichzeitig nach unterschiedlichen Auswertekriterien ausgewertet werden, und
über die Auswertepfade (S, I) gleichzeitig unterschiedliche, die gleiche tatsächliche Situation im Überwachungsbereich (15) repräsentierende Umgebungsinformationen für die Steuereinrichtung (23) bereitstellt, wobei die Steuereinrichtung (23) zur Gewichtung der über die einzelnen Auswertepfade bereitgestellten Umgebungsinformationen ausgebildet ist und das Steuersignal (25) in Abhängigkeit von der gemäß der Reaktionsstrategie vorgenommenen Gewichtung der Umgebungsinformationen bildet, und
wobei ein Auswertepfad als Informationspfad (I) ausgebildet ist, in welchem die Messdaten (19) nach dem Kriterium des Informationsgehalts ausgewertet werden wobei der Informationspfad (I) zur Durchführung einer auf den Messdaten (19) basierenden Erkennung und Verfolgung von im Überwa- chungsbereich (15) befindlichen Objekten (17) ausgebildet ist,
**dadurch gekennzeichnet,**
**dass** ein Auswertepfad als Sicherheitspfad (S) ausgebildet ist, in welchem die Messdaten (19) nach dem Kriterium der Sicherheit ausgewertet werden und ausschließlich daraufhin untersucht werden, ob sich im Überwachungsbereich überhaupt ein Objekt befindet.

2. Vorrichtung nach Anspruch 1,
**dadurch gekennzeichnet,**
**dass** für die Auswertepfade (S, I) ein gemeinsamer optoelektronischer Sensor (13) vorgesehen ist, dessen Messdaten (19) gleichzeitig in allen Auswertepfaden (S, I) ausgewertet werden.

3. Vorrichtung nach Anspruch 1,
**dadurch gekennzeichnet,**
**dass** jedem Auswertepfad wenigstens ein eigener optoelektronischer Sensor zugeordnet ist, dessen Messdaten ausschließlich in diesem Auswertepfad ausgewertet werden, wobei bevorzugt jedem Sensor ein eigenes Auswertemodul zugeordnet ist, in welchem die vom jeweiligen Sensor gelieferten Messdaten ausgewertet werden.

4. Vorrichtung nach Anspruch 3,
**dadurch gekennzeichnet,**
**dass** den Sensoren eine gemeinsame Auswerteeinrichtung und/oder eine gemeinsame Steuereinrichtung zugeordnet sind.

5. Vorrichtung nach einem der vorhergehenden Ansprüche,
**dadurch gekennzeichnet,**
**dass** die Reaktionsstrategie und/oder die Gewichtung der Steuereinrichtung (23) insbesondere situationsadaptiv während einer Bewegung des Gegenstandes (11) insbesondere während des Fahrbetriebs eines Fahrzeugs, verändert werden/wird, bevorzugt automatisch.

6. Vorrichtung nach einem der vorhergehenden Ansprüche,
**dadurch gekennzeichnet,**
**dass** der oder jeder optoelektronische Sensor (13) als Laserscanner ausgebildet ist, insbesondere als Entfernungen und Winkel messender Laserscanner, der in zumindest einer Abtastebene zu jedem Entfernungswert einen auf eine Sensorachse bezogenen Winkelwert liefert.

7. Verfahren zum Überwachen der Umgebung eines Gegenstandes, insbesondere eines Fahrzeugs, bei dem
- mit wenigstens einem am Gegenstand (11) angebrachten optoelektronischen Sensor (13) ein Überwachungsbereich (15) abgetastet wird und von im Überwachungsbereich (15) befindlichen Objekten (17) stammende Messdaten (19) geliefert werden,
- von einer dem Sensor (13) nachgeordneten Auswerteeinrichtung (21) die vom Sensor (13) gelieferten Messdaten (19) ausgewertet und auf den Messdaten (19) basierende Umgebungsinformationen bereitgestellt werden, und
- von einer der Auswerteeinrichtung (21) nachgeordneten Steuereinrichtung (23) auf die bereitgestellten Umgebungsinformationen gemäß einer vorgegebenen Reaktionsstrategie reagiert wird, indem ein zur Steuerung des Gegenstandes (11) dienendes Steuersignal (25) bereitgestellt wird,
wobei mittels der Auswerteeinrichtung (21) die Messdaten (19) gleichzeitig in wenigstens zwei parallelen, voneinander unabhängigen Auswertepfaden (S, I) nach unterschiedlichen Auswertekriterien ausgewertet werden,
über die Auswertepfade (S, I) gleichzeitig unterschiedliche, die gleiche tatsächliche Situation im Überwachungsbereich (15) repräsentierende Umgebungsinformationen für die Steuereinrichtung (23) bereitgestellt werden, und
mittels der Steuereinrichtung (23) die über die einzelnen Auswertepfade bereitgestellten Umgebungsinformationen gemäß der Reaktionsstrategie gewichtet werden und das Steuersignal (25) in Abhängigkeit von der Gewichtung der Umgebungsinformationen gebildet wird, und
in einem Informationspfad (I) die Messdaten (19) nach dem Kriterium des Informationsgehalts ausgewertet werden, wobei in dem Informationspfad (I) eine Erkennung und Verfolgung von im Überwachungsbereich (15) befindlichen Objekten (17) durchgeführt wird, **dadurch gekennzeichnet,**
**dass** in einem Sicherheitspfad (S) die Messdaten (19) nach dem Kriterium der Sicherheit ausgewertet und ausschließlich daraufhin untersucht werden, ob sich im Überwachungsbereich überhaupt ein Objekt befindet.

8. Verfahren nach Anspruch 7,
**dadurch gekennzeichnet,**
**dass** die Messdaten (19) für die Auswertepfade (S, I) von einem gemeinsamen optoelektronischen Sensor (13) bereitgestellt und dessen Messdaten (19) gleichzeitig in allen Auswertepfaden (S, I) ausgewertet werden.

9. Verfahren nach Anspruch 7 oder 8,
**dadurch gekennzeichnet,**
**dass** für jeden Auswertepfad die Messdaten von wenigstens einem separaten optoelektronischen Sensor bereitgestellt und dessen Messdaten ausschließlich in diesem Auswertepfad ausgewertet werden, wobei bevorzugt für jeden Sensor ein eigenes Auswertemodul vorgesehen wird, in welchem die vom jeweiligen Sensor gelieferten Messdaten ausgewertet werden.

10. Verfahren nach einem der Ansprüche 7 bis 9,
**dadurch gekennzeichnet,**
**dass** die Reaktionsstrategie und/oder die Gewichtung der Steuereinrichtung (23) insbesondere situationsadaptiv während einer Bewegung des Gegenstandes (11), insbesondere während des Fahrbetriebs eines Fahrzeugs (11), verändert werden/wird, vorzugsweise automatisch.

11. Verfahren nach einem der Ansprüche 7 bis 10,
**dadurch gekennzeichnet,**
**dass** als optoelektronischer Sensor (13) ein Laserscanner verwendet wird, insbesondere ein Entfernungen und Winkel messender Laserscanner, der in zumindest eine Abtastebene zu jedem Entfernungswert einen auf eine Sensorachse bezogenen Winkelwert liefert.

## Claims

1. An apparatus for monitoring the environment of an item, in particular of a vehicle, comprising
- at least one optoelectronic sensor (13) which is attached to the item (11), which samples a monitored zone (15) and which delivers measured data (19) originating from objects (17) located in the monitored zone (15);
- an evaluation device arranged after the sensor (13) for evaluating the measured data (19) delivered by the sensor (13) and for providing environmental information based on the measured data (19); and
- a control device (23) which is arranged after the evaluation device (21) and which responds to the provided environmental information in accordance with a presettable response strategy by providing a control signal (25) serving for the control of the item (11),
wherein the evaluation device (21) has at least two parallel evaluation paths (S, I) which are independent of one another and in which the measured data (19) are evaluated simultaneously in accordance with different evaluation criteria and
simultaneously provides different environmental information representing the same actual situation in the monitored zone (15) for the control device (23);
wherein the control device (23) is made for weighting the environmental information provided via the individual evaluation paths and forms the control signal (25) in dependence on the weighting of the environmental information carried out in accordance with the response strategy; and
wherein one evaluation path is made as an information path (I) in which the measured data (19) are evaluated in accordance with the criterion of the information content, wherein the information path (I) is made for carrying out a recognition and tracking of objects '(17) located in the monitored zone (15) on the basis of the measured data, (19).
**characterised in that**
one evaluation path is made as a safety path (S) in which the measured data (19) are evaluated in accordance with the criterion of safety and are only examined as to whether an object is present in the monitored zone at all.

2. An apparatus in accordance with claim 1, **characterised in that** a common optoelectronic sensor (13) is provided for the evaluation paths (S, I) and its measured data (19) are evaluated simultaneously in all evaluation paths (S, I).

3. An apparatus in accordance with claim 1, **characterised in that** at least one separate optoelectronic sensor is associated with each evaluation path and its measured data are only evaluated in this evaluation path, with preferably a separate evaluation module in which the measured data delivered by the respective sensor are evaluated being associated with each sensor.

4. An apparatus in accordance with claim 3, **characterised in that** a common evaluation device and/or a common control device is/are associated with the sensors.

5. An apparatus in accordance with any one of the preceding claims, **characterised in that** the response strategy and/or the weighting of the control device (23) is/are in particular changed, preferably automatically, in a situation-adaptive manner during a movement of the item (11), in particular during the driving operation of a vehicle.

6. An apparatus in accordance with any one of the preceding claims, **characterised in that** the or each optoelectronic sensor (13) is made as a laser scanner, in particular as a distance and angle measuring laser scanner, which delivers an angular value relative to a sensor axis for each distance value in at least one sampling plane.

7. A method for monitoring the environment of an item, in particular of a vehicle, wherein
- a monitored zone (15) is sampled with at least one optoelectronic sensor (13) attached to the item (11) and measured data (19) originating from objects (17) located in the monitored zone (15) are delivered;
- the measured data (19) delivered from the sensor (13) are evaluated by an evaluation device (21) arranged after the sensor (13) and environmental information based on the measured data (19) is provided; and
- a response in accordance with a preset response strategy is given by a control device (23) arranged after the evaluation unit (21) in response to the environmental information provided in that a control signal (25) serving for the control of the item (11) is provided;
wherein the measured data (19) are evaluated simultaneously by means of the evaluation device (21) in at least two parallel, mutually independent evaluation paths (S, I) in accordance with different evaluation criteria;
different environmental information representing the same actual situation in the monitored zone (15) is provided simultaneously for the control device (23) via the evaluation paths (S, I); and
the environmental information provided via the individual evaluation paths is weighted in accordance with the response strategy by means of the control device (23) and the control signal (25) is formed in dependence on the weighting of the environmental information; and
the measured data (19) are evaluated in accordance with the criterion of the information content in an information path (I), with a recognition and tracking of objects (17) located in the monitored zone (15) being carried out in the information path (I), **characterised in that**
the measured data (19) are evaluated in accordance with the criterion of safety in a safety path (S) and are only examined as to whether an object is located in the monitored zone at all.

8. A method in accordance with claim 7, **characterised in that** the measured data (19) for the evaluation paths (S, I) are provided by a common optoelectronic sensor (13) and its measured data (19) are evaluated simultaneously in all evaluation paths (S, I).

9. A method in accordance with claim 7 or claim 8, **characterised in that** the measured data from at least one separate optoelectronic sensor are provided for each evaluation path and its measured data are used only in this evaluation path, with preferably a separate evaluation module in which the measured data delivered by the respective sensor are evaluated being provided for each sensor.

10. A method in accordance with any one of the claims 7 to 9, **characterised in that** the response strategy and/or the weighting of the control device (23) is/are in particular changed, preferably automatically, in a situation-adaptive manner during a movement of the item (11), in particular during the driving operation of a vehicle (11).

11. A method in accordance with any one of the claims 7 to 10, **characterised in that** a laser scanner, in particular a distance and angle measuring laser scanner, is used as the optoelectronic sensor (13) which delivers an angular value relative to a sensor axis for each distance value in at least one sampling plane.

## Revendications

1. Dispositif pour la surveillance de l'environnement d'un objet, en particulier d'un véhicule automobile, comprenant
- au moins un capteur optoélectronique (13) monté sur l'objet (11), qui palpe une zone de surveillance (15) et qui délivre des données de mesure (19) provenant d'objets (17) qui se trouvent dans la zone de surveillance (15),
- une unité d'évaluation (21) agencée à la suite du capteur (13) pour évaluer les données de mesure (19) délivrées par le capteur (13) et pour préparer des informations d'environnement en se basant sur les données de mesure (19), et
- un système de commande (23) agencé à la suite de l'unité d'évaluation (21), qui réagit aux informations d'environnement préparées selon une stratégie de réaction prédéterminée en préparant un signal de commande (25) qui sert à la commande de l'objet (11),
dans lequel l'unité d'évaluation (21) comporte au moins deux trajets d'évaluation parallèles indépendants l'un de l'autre (S, I) dans lesquels les données de mesure (19) sont évaluées simultanément d'après des critères d'évaluation différents, et
via les trajets d'évaluation (S, I) l'unité d'évaluation prépare simultanément pour l'unité de commande (23) des informations d'environnement différentes qui représentent la même situation effective dans la zone de surveillance (15), ledit système de commande (23) étant réalisé pour pondérer les informations d'environnement préparées via les trajets d'évaluation individuels et forme le signal de commande (25) en fonction de la pondération effectuée selon la stratégie de réaction sur les informations d'environnement, et
dans lequel un trajet d'évaluation est réalisé à titre de trajet d'information (I) dans lequel les données de mesure (19) sont évaluées suivant le critère de leur contenu informatif, dans lequel le trajet d'information (I) est réalisé pour l'exécution d'une reconnaissance et d'un suivi, en se basant sur les données de mesure (19), d'objets (17) qui se trouvent dans la zone de surveillance (15),
**caractérisé en ce que**
un trajet d'évaluation est réalisé à titre de trajet de sécurité (S) dans lequel les données de mesure (19) sont évaluées suivants le critère de sécurité et ces données sont exclusivement analysées quant à savoir si un objet se trouve effectivement dans la zone de surveillance.

2. Dispositif selon la revendication 1,
**caractérisé en ce qu'**il est prévu pour les trajets d'évaluation (S, I) un capteur optoélectronique commun (13) dont les données de mesure (19) sont évaluées simultanément dans tous les trajets d'évaluation (S, I).

3. Dispositif selon la revendication 1,
**caractérisé en ce qu'**à chaque trajet d'évaluation est associé au moins un capteur électronique propre, dont les données de mesure sont évaluées exclusivement dans ce trajet d'évaluation, et à chaque capteur est associé de préférence un module d'évaluation propre dans lequel les données de mesure délivrées par le capteur respectif sont évaluées.

4. Dispositif selon la revendication 3,
**caractérisé en ce qu'**une unité d'évaluation commune et/ou une unité de commande commune sont associées au capteur.

5. Dispositif selon l'une des revendications précédentes,
**caractérisé en ce que** la stratégie de réaction et/ou la pondération de l'unité de commande (23) est modifiée, de préférence automatiquement, en particulier de façon adaptative vis-à-vis de la situation pendant un mouvement de l'objet (11), en particulier pendant la circulation d'un véhicule automobile.

6. Dispositif selon l'une des revendications précédentes,
**caractérisé en ce que** le capteur optoélectronique ou chaque capteur optoélectronique (13) est réalisé sous forme de scanner à laser, en particulier comme un scanner à laser qui mesure des éloignements et des angles, qui délivre dans au moins un plan de palpage et pour chaque valeur d'éloignement une valeur angulaire qui se réfère à un axe du capteur.

7. Procédé pour la surveillance de l'environnement d'un objet, en particulier d'un véhicule automobile, dans lequel
- au moyen d'au moins un capteur optoélectronique (13) monté sur l'objet (11) on palpe une zone de surveillance (15) et on délivre des données de mesure (19) qui proviennent d'objets (17) qui se trouvent dans la zone de surveillance (15),
- avec une unité d'évaluation (21) agencée à la suite du capteur (13), on évalue les données de mesure (19) fournies par le capteur et on prépare des informations d'environnement qui se basent sur les données de mesure (19), et
- avec une unité de commande (23) agencée à la suite de l'unité d'évaluation (21) on réagit aux informations d'environnement préparées selon une stratégie de réaction prédéterminée, en préparant un signal de commande (25) qui sert à la commande de l'objet (11),
dans lequel, au moyen de l'unité d'évaluation (21), on évalue les données de mesure (19) simultanément dans au moins deux trajets d'évaluation (S, I) parallèles indépendants l'un de l'autre, d'après des critères d'évaluation différents,
via les trajets d'évaluation (S, I) on prépare simultanément pour l'unité de commande (23) des informations d'environnement différentes qui représentent la même situation effective dans la zone de surveillance (15), et
au moyen de l'unité de commande (23) on pondère les informations d'environnement préparées via les trajets d'évaluation individuels suivant la stratégie de réaction et le signal de commande (25) est formé en fonction de la pondération des informations d'environnement, et dans un trajet d'information (I), les données de mesure (19) sont évaluées d'après le critère du contenu informatif, de sorte que l'on exécute dans le trajet d'information (I) une reconnaissance et une poursuite d'objets (17) qui se trouvent dans la zone de surveillance (15),
**caractérisé en ce que**, dans un trajet de sécurité (S), on évalue les données de mesure (19) d'après le critère de sécurité et on analyse ensuite exclusivement si un objet se trouve effectivement dans la zone de surveillance.

8. Procédé selon la revendication 7,
**caractérisé en ce que** les données de mesure (19) pour les trajets d'évaluation (S, I) sont préparées par un capteur optoélectronique commun (13), dont les données de mesure (19) sont évaluées simultanément dans tous les trajets d'évaluation (S, I).

9. Procédé selon la revendication 7 ou 8,
**caractérisé en ce que** pour chaque trajet d'évaluation les données de mesure provenant d'au moins un capteur optoélectronique séparé sont préparées et ces données de mesure sont évaluées exclusivement dans ce trajet d'évaluation, et dans lequel on prévoit de préférence pour chaque capteur un module d'évaluation propre dans lequel les données de mesure délivrées par le capteur respectif sont évaluées.

10. Procédé selon l'une des revendications 7 à 9,
**caractérisé en ce que** la stratégie de réaction et/ou la pondération de l'unité de commande (23) est/sont modifiée(s) en particulier de manière adaptative vis-à-vis de la situation pendant un mouvement de l'objet (11), en particulier pendant la circulation d'un véhicule automobile (11).

11. Procédé selon l'une des revendications 7 à 10,
**caractérisé en ce que** l'on utilise à titre de capteur optoélectronique (13) un scanner à laser, en particulier un scanner à laser qui mesure des éloignements et des angles, qui délivre dans au moins un plan de palpage et pour chaque valeur d'éloignement, une valeur angulaire qui se réfère à un axe du capteur.
